(19) Europäisches Patentamt
European Patent Office
Office européen des brevets

(11) Publication number: 0 088 544 B1

(12) **EUROPEAN PATENT SPECIFICATION**

(45) Date of publication of patent specification: **30.09.87**

(51) Int. Cl.$^4$: **G 06 F 9/36**

(21) Application number: **83300817.0**

(22) Date of filing: **17.02.83**

(54) **Index limited continuous operation vector processor.**

(30) Priority: **26.02.82 JP 28905/82**

(43) Date of publication of application:
**14.09.83 Bulletin 83/37**

(45) Publication of the grant of the patent:
**30.09.87 Bulletin 87/40**

(84) Designated Contracting States:
**DE FR GB NL**

(56) References cited:
**GB-A-1 575 215**

**PROCEEDINGS OF THE IFIP CONGRESS 1974, 5th-10th August 1974, pages 60-64, Amsterdam, NL., H. AISO et al.: "A very high-speed microprogrammable pipeline signal processor"**
**IBM TECHNICAL DISCLOSURE BULLETIN, vol. 20, no. 9, February 1978, pages 3606-3607, New York, USA, J.S. LIPTAY et al.: "Load bypass for address arithmetic"**

(73) Proprietor: **Kabushiki Kaisha Toshiba**
**72, Horikawa-cho Saiwai-ku**
**Kawasaki-shi Kanagawa-ken 210 (JP)**

(72) Inventor: **Yamazaki, Isamu**
**1-6-1, Saginuma Miyamae-ku**
**Kawasaki-shi Kanagawa-ken (JP)**

(74) Representative: **Freed, Arthur Woolf et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 088 544 B1

## Description

The present invention relates to an index limited continuous operation vector processor including a data memory for storing data in elements of a matrix, an operand address calculation circuit for calculating addresses of data in said data memory designated by an index value when the index value is input and an arithmetic unit for performing a required operation on data corresponding to the addresses thus calculated.

Calculations of vectors and matrices are often required in scientific and engineering applications. When these calculations are to be performed using a computer, elements of those vectors and matrices are normally stored in the memory of the computer at a fixed address interval in the sequence of indices thereof. Such data set is called an "array". A vector processor (or an array processor) is designed to perform continuous operations of the same kind at high speed for the data stored at a fixed address interval using a so-called pipeline technique in an attempt to increase the calculation speed of array. An prior art vector processor can perform such calculations as shown in Examples 1 and 2 below at a high speed.

(Example 1)

```
        DO 10 I=1, 100
        A(I)=B(I)*C(I)
10      CONTINUE
```

(Example 2)

```
        DO 20 J=1, 99, 2
        X(I, J)=Y(I, J)+Z(J)
20      CONTINUE
```

However, in practice, there are many cases where the expression to be calculated varies in each element by a specified condition as shown in Example 3 below (conditioned expression).

(Example 3)

```
      DO 30 I=1, 100
      IF(G(I) . (GT.O.O) A(I)=A(I)+C(I)
      IF(G(I) . LE.O.O) A(I)=A(I) D(J, I)
30    CONTINUE
```

In the above case, the operation content varies according to whether G(I) is positive or negative, (or zero). In addition, since the operand varies (i.e. C(I) or D(J, I), the pipeline is interrupted each time, thus making smooth processing using the prior art vector processor impossible.

GB 1 575 215 discloses a floating point processor for use in high speed array processing for performing an arithmetic calculation on data stored in a data memory, the processor including an address arithmetic portion for calculating addresses of data in the data memory.

An object of the present invention is to provide a vector processor capable of a processing operation on the array whose operation content varies according to the value of each element specified in the array smoothly and at high speed based on the consideration of the above-mentioned situation.

According to the invention, there is provided a vector processor including:

a data memory for storing elements of a vector or a matrix;

an index memory for storing one or more sets of indexes for the elements stored in said data memory;

an operand address calculation circuit for calculating a read-out address for reading out data from said data memory such that, when an index which is included in a particular index set is read out from said index memory, data designated by the index thus read out is read out; and

an arithmetic circuit for performing a required calculation for data read out from said data memory according to the read-out address obtained by the calculation in said operand address calculation circuit, whereby continuous vector calculation for data stored in said data memory is performed in response to continuous reading out of indexes from said index memory, characterized by:

a first register for storing address data representing a start address of an index in an index set among the index sets stored in said index memory;

a second register for storing address data corresponding to an address in a vacant region, said vacant region being defined as a memory region of said index memory in which said index set is not stored;

address progressing means for successively reading out indexes belonging to said index set while the address represented by the address data stored if said first register is being progressed in a predetermined manner, and for separately progressing the address represented by the address data stored in said second register each time an index belonging to said index set is read out;

a third register for temporarily storing indexes successively read out from said index memory;

a judging circuit for judging as to whether or not data read out from said data memory corresponding to an index temporarily stored in said third register or calculated value outputted from said arithmetic circuit has a prespecified attribute; and

a selector for selectively writing an index into said vacant region of said index memory according to the address content changed by said address progressing means of the address data stored in said second register,

wherein index sets whose elements are indexes of data or calculated values judged to have the same attribute by said judging circuit are classified, and stored in said index memory, whereby continuous operand access may be executed only for indexes which belong to said classified and stored index sets.

In the described embodiment of the invention, a vector processor is provided with a first function to evaluate a condition on the value of each element of specified array, and to generate/store in advance separate index sets corresponding thereto, together with a second function to perform continuous operand access only to the index value belonging to a specified index set out of the index sets thus generated, thereby making it possible not to lower the efficiency of the pipeline processing even when the expression to be calculated is conditioned.

For example, the vector processor of the present invention performs the calculation of Example 3 in the following three steps.

(Step 1) Classification of Indexes

POSG={I | G(1)>0}, NEGG={I | G(I)≦0}

(Step 2) Calculation

FOR IεPOSG, A(I)=A(I)+C(I)

(Step 3) Calculation

FOR IεNEGG, A(I)=A(I)*D(J, I)

where POSG is the set of index I which is defined by G(I)>0, NEGG is the set of index I which is defined by G(I)≦0. That is, in the first step, POSG which is the set of index I such as G(I)>0 and NEGG which is the set of index I such as G(I)≦0 are separately generated and stored in advance by the first function. In the second step, using said second function, operand access is continuously performed to execute calculation

A(I)=A(I)+C(I)

specified at this time only for the index I belonging to set POSG out of index sets generated using said second function. Then, in the third step, again using said second function, operand access is continuously performed to execute calculation

A(I)=A(I)*D(J, I)

specified at this time only for index I belonging to set NEGG out of index sets generated in the first step again using said second function. In this manner, calculation processing can be made smoothly without interrupting the pipeline.

In addition, the vector processor is designed so that the calculation step for a certain (conditioned) expression and the classification step for the calculation of the succeeding conditioned expression can be performed concurrently. In this manner, since time required for the generation of each index set during the process can be saved even when calculation is performed continuously on more than one expression, calculation processing alone can be continuously performed, making it possible to reduce greatly the calculation processing time as a whole.

In this manner, the vector processor can perform smoothly the calculation on the array data with the expression being conditioned by the value of each element of specified array data (for example, when in a certain critical curve, the evaluation equation differs between its both sides), and even such a case in which continuous calculation is performed for a plurality of different expressions the calculation can be performed at the high test speed. Since calculation of a certain expression and the generation of index set for the next expression are performed concurrently, the operation can be performed according to a program in which low efficiency instructions such as conditional branch instructions are not used.

In addition, in the case of sparse matrix, calculation can be performed at high speed by eliminating the calculation about zero elements for the calculation of product of matrix and vector, etc. as much as possible. On the other hand, the vector processor can easily perform a calculation in which only non-zero elements are selected, making it possible to handle sparse matrix efficiently (it has so far been very difficult in conventional vector processor).

An embodiment of the invention will now be described, by way of example, with reference to the accompanying drawings, in which:

Figure 1 is a block diagram showing the configuration of a preferred embodiment of the vector processor of the present invention;

Figures 2(a) and 2(b) illustrate the manner in which indices are stored in the index memory shown in Figure 1; and

Figure 3 is a time chart showing an example of the operation of the vector processor shown in Figure 1.

Figure 1 shows a preferred embodiment of the vector processor of the present invention.

As shown in Figure 1, the vector processor is comprised of a vector operation section 10, an operand address calculation section 20, an index calculation section 30, and a control section 50 for controlling those sections as a whole in order to cause those sections to perform the later-mentioned specified processing.

Of those sections, the vector operation section 10 is for performing operation of specified data, i.e., vectors and matrices (hereafter referred to as arrays). The section 10 is comprised of a data memory 11 for storing operand data, operation result data, and other data, a B register 12 and a C register 14 for temporarily storing data read from the data memory 11, a B1 register 13 for temporarily storing data read from the B register 12, an ALU 15 for performing the specified operation based on the data stored in the B1 register 13 and the C register 14, an A register 16 for temporarily storing the operation result of the ALU 15, and a DA register 17 for temporarily storing address signals to be fed from the operand address calculation section 20 to the data memory 11.

The operand address calculation section 20 is for calculating the operands required for the operation, i.e., addresses of arrays in the data memory 11, and comprised of an MA register 21, an MB register 22, and an MC register 23 for storing multiplier values required for the operation, a BA register 24, a BB register 25 and a BC register 26 for storing base values, a selector SC for selectively outputting a value out of those stored in the MA register 21, MB register 22, and MC register 23 under the control of the control section 50, a selector SD for selectively outputting any one value out of those stored in the BA register 24, BB register 25, and BC register 26 under the control of the control section 50, a multiplier 27 for multiplying the value output from the selector SC by the value fed from the index calculation section 30, and an adder 28 for adding the value output from the multiplier 27 to the value output from the selector SD.

The index calculation section 30 is for generating and storing separate index sets according to the result of discrimination of the nature of the data, and comprised of an index memory 31 for storing the index sets thus generated, an I register 32 for temporarily storing the value read from the index memory 31, and an I1 register 33 for temporarily storing the value read from the I register 32, a selector SB for selectively outputting any one of the values stored in the I register 32 and the I1 register 33 under the control of the control section 50, an I2 register 34 for temporarily storing the value output from the selector SB, a V register 35 and a W register 36 for temporarily storing the value read from the I2 register 34, a positive/negative discriminator 37 for discriminating the nature (attribute) of the value calculated at the ALU 15 of the vector operation section 10, that is, for judging "plus/minus" sign of the value calculated at the ALU 15 in this embodiment (in practice, the "positive/negative" judgement is considered sufficient as in the case of this embodiment, however, as a matter of rule judgement on "first nature/second nature" is carried out according to each application), a selector SE for selecting any one of the values stored in the V register 35 and the W register 36 based on the judgement by the positive/negative discriminator 37 and for loading the selected value into the index memory 31, an IB0 register 38 and IB1 register 39 for storing the bias value of the write or read address in the index memory 31, a selector SA for selectively outputting any one of the values stored in the IB0 register 38 and the IB1 register 39 under the control of the control section 50, an adder 40 for determining write or read address in the index memory 31 by adding the value output from the selector SA and the value output from the selector SB, an IA register 41 for temporarily storing the address signal output from an adder 40, an end judging circuit 42 for judging whether or not the storage content of the I register 32 indicates the end of a certain index set through monitoring the storage content, a +1 adder 43 for increasing the storage content of the I register 32 by one particularly when continuous calculation of a plurality of formulas is not required, and a selector SF for selecting any one of the value output from the +1 adder 43 and the index values read from the index memory 31 under the control of the control section 50 and for storing the value thus selected in the I register 32. To the multiplier 27 of the operand address calculation section 20 described previously, the value selectively output from the selector SB is fed from time to time.

The vector processor basically performs the following operation.

$$\text{FOR } I\varepsilon U, \begin{cases} A(I)=FUNC(B(I),\ C(I)) \\ V\ =\{I \mid P(A(I))\} \\ W\ =\{I \mid \rightarrow P(A(I))\} \end{cases}$$

where FUNC (X, Y) is a binominal scalar operation (add, subtract, multiply, divide, etc.) performed at the ALU 15 of the vector operation section 10, and P (X) is a propositional function of the following three kinds determined by the positive/negative discriminator 37; that is, any one of (1), (2), and (3) where (1): true when $X>0$, (2): true when $X\geqq0$, and (3) true when $X=0$. U, V, and W which are sets of index value I are stored in the index memory 31, and A(I), B(I), and C(I) which are data corresponding to respective index I are stored in the data memory 11. If these A(I), B(I) and C(I) are vectors, i.e., one dimensional arrays, the elements of the vectors are stored in the sequence of addresses of the data memory 11. Accordingly, if the address of the first element A(0), etc. is BA, the address of A(I) would become BA+I generally. That is, the values of multipliers MA, MB, and MC to be stored in the MA register 21, MB register 22, and MC register 23 of the operand calculation section 20 respectively become 1. On the other hand, when A(I), B(I), and C(I) are a part of array of more than two dimensions, for example, when A(I) is a three dimensional array AA(X, Y, Z) where X=J Y=K, and Z=I, and if the address of AA (0, 0, 0) is BA′, the address of

$$A(I)=AA(J,\ K,\ I)$$

will become

$$BA'+J+Xmax*K+Xmax*Ymax*I.$$

Therefore, if

$$BA'+J+Xmax*K$$

is replaced by the base value BA and Xmax*Ymax is replaced by the multiplier value MA, the above address will become BA+MA*I. In this manner, the operand address calculation section 20 can calculate actual data memory address DA for the three sets of arrays A, B, and C from the index value I to be applied from the selector SB of the index calculation section 30, the multipliers MA, MB, and MC, and the base values BA, BB, and BC to be stored in the BA register 24, BB register 25, and BC register 26 respectively using the multiplier 27 and the adder 28.

In the vector processor of this embodiment the subset of the array to be operated is stored in the index memory 31 as a set of that index I as described previously, and its type is the index chain type. That is, in this embodiment, a certain set (PSOG for example) and its complementary set (NEGG) can be generated concurrently, and these two sets are stored in a single index spectral area as two chains. Accordingly, if the head address of this index spectral area is IB, the address of the index spectral element corresponding to the index I would be IB+I, and at this address the value of the next I of the same group as this I would be stored.

An example of the method for generating such subset (index chain), i.e., the operation of the aforementioned first step, will be described sequentially with reference to Figures 2(a) and 2(b).

Figure 2(a) shows an example of the memory structure of the index memory 31, and Figure 2(b) shows an example of the judgement of data G(I) (assumed to have been stored in the data memory 11 by a proper input means not shown) by the positive/negative discriminator 37 when the index is stored as shown in Figure 2(a) and the transition of the content stored in each of the I register 32 V register 35, and W register 36 based on the above judgement. It is assumed that the index set U (IεU) to be used in the intended calculation is stored in advance as the head address "300" for example as shown in Figure 2(a) in the index memory 31. It is also assumed that the value of the index I to be read out from the index memory 31 in the first step 1 is determined by the index set U. Accordingly, the address designation of the index memory 31 is sequentially determined based on the index value I read out from the index memory 31. The aforementioned +1 adder 43 is not used.

In the following description, it is assumed that the selector SF is operating so as to selectively output only index value I to be read from the index memory 31. The head address value of the index set U is stored in advance in the IB0 register 38, the head address value of the index subset to be generated by the operation described below is stored in the IB1 register in advance, and these values are selectively output through the selector SA from time to time according to the following operation.

(1) A proper symbol indicating the end of index set to be applied is set to the V register 35 and the W register 36. In Figure 2, the end symbol is given by " ■." At the same time, the head index value "1" (I=1) of the index set "U" is set to the I register 32.

(2) One of the above data G(I) is read from the data memory 11. At this time, the ALU 15 is in the non-active state, and directly outputs the data G(I) read out to the positive/negative discriminator 37.

(3) The nature (attribute) of the data G(I) is judged by the positive/negative discriminator 37. As a result, (i) if G(I)>0, the content of the V register 35 is loaded to the index memory 31 at address $IB_1$+I and the content of the I register 32 is set to the V register 35, and (ii) if G(I)≦0, the content of the W register 36 is loaded to the index memory 31 at address $IB_1$+I and the content of the I register 32 is set to the W register.

(4) The value of the IB0 register 38 and the value of the I register 32 are summed by the adder 40, the address of the index memory 32 is generated, and the content of the address "$IB_0$+I" of the index memory 31 is set to the I register 32.

(5) The content of the I register 32 is checked by the end judging circuit 42. If the content is the maximum value of the index I32, the operation proceeds to the processing of the next step (6), and if otherwise, the operation returns to the previous step (2).

(6) Operation is made to satisfy the following:

POSGmax=content of V register 35

NEGGmax=content of W register 36

As the above processings are performed sequentially, the contents stored in the I register 32, V register 35, and W register 36 change in the manner shown in Figure 2(b), and as a result an index chain as shown in Figure 2(a) is generated and stored. In the example shown in Figures 2(a) and 2(b), the contents enclosed with a circle "O" in Figure 2(b) becomes the contents loaded in the index memory 31. In the same example, the content "10" of the V register 35 enclosed with a double circle "◎" Figure 2(b) becomes the POSGmax, and the content "9" of the W register 36 enclosed with a double circle "◎" becomes the NEGGmax.

Now, because in the aforementioned example the classification was made for convenience's sake based on the index set U in which the index I is arranged in a proper sequence, a chain is formed in the descending order of the index I as shown in Figure 2. However, an arbitrary form of the arrangement of the index set U may be adopted theoretically. Accordingly, the chain form may be in the ascending order or even at random. In any case, however, at a point corresponding to the end of the index values the end symbol " ■ " is entered. When the chain is formed in the descending order of the index I as shown in Figure 2, chain forming can also be made using the +1 adder. In this case, in the above step (4), the content of the I register 32 is incremented by the +1 adder 43.

Moreover, according to the generation method of the aforementioned subset, the subset of subset, i.e., product set, can be obtained by setting an optional value X to the I register 32 in step (1) shown above (causing to be I=X) and monitoring the end symbol " ■ " (this symbol is stored in the index memory 31 in advance) in step (5).

Then, in step (2), the operation for IεPOSG is performed. In this case, first POSGmax, i.e., "10", is set to the I register 32, the index memory 31 is read at the update timing of index I taking "I+$IB_0$"

as its address, and the index value thus read is set to the I register 32. As a result, only the values of index I whose characteristic is G(I)>0 are set to the I register 32 one after another, and the same operation FUNC is performed at ALU 15 accordingly.

The above operation will be described with reference to Figure 3. In this embodiment, starting from a certain index value I, 5-step pipeline control is performed. In Figure 3, from the cycle (n) to the cycle (n+6) are shown. The (*) mark in (a) of Figure 3 indicates the updated timing of index I, Now, if it is assumed that "6" is set to the I register 32 at the beginning of the cycle (n) (refer to (a) of Figure 3), the operand address calculation section 20 will start address calculation of the data B(6). That is, the multiplier 27 multiplies the value "6" of the I register 32 by the multiplier MB of the MB register 22, and adds the base value BB of the BB register 25 to the result of the above multiplication. The value BB+6·MB thus obtained is set to the DA register 17 at the beginning of the cycle (n+1) (refer to (c) of Figure 3. As a result, the vector operation section 10 reads the content of address BB+6·MB of the data memory 11, i.e., data B(6) (refer to (d) of Figure 3, sets the data B(6) to the B register 12 at the beginning of the cycle (n+2) (refer to (e) of Figure 3, and then sets the data B(6) to the B' register 13 at the beginning of the cycle (n+3) (refer to (f) of Figure 3).

On the other hand, the operand address calculation section 20 finds address BC+6·MC of the data C (6) in the cycle (n+1) in the same manner using the contents of the MC register 23 and the BC register 26, and sets the address BC+6·MC thus obtained to the DA register 17 at the beginning of the cycle (n+2) (refer to (c) of Figure 3).

Thereupon, the vector operation section 10 reads the content of the data memory 11, i.e., data C(6), specified by the content of the DA register 17 (refer to (d) Figure 3), and sets the data C(5) to the C register 14 at the beginning of the cycle (n+3) (refer to (g) of Figure 3). Thereafter, the vector operation section 10 starts operation based on the data B(6) and C(6) having set at the ALU 15 (refer to (h) of Figure 3). The ALU 15 requires three cycles from (n+3) to (n+5) for the execution of FUNC, and during that time the contents of the B1 register 13 and the C register 14 are held (refer to (f) and (g) of Figure 3.

Since the operation result of the ALU 15 should be stored in the data memory 11 as the data A(6), the content of the I register 36 is set to the I1 register 33 immediately before the update (from "6" to "4") of the value of index I at the beginning of the cycle (n+3) (refer to (b) of Figure 3). The operand address calculation section 20, during the cycle (n+5), calculates the address of the data A(6) using the content MA of the MA register 21 and the content BA of the BA register 24, using the value re-set to the I1 register 33, and sets the address BA+6·MA thus obtained to the DA register 17 at the beginning of the cycle (n+6) (refer to (c) of Figure 3). And, as the operation result (FUNC (B96), C(6) is set to the A register 16 at the beginning of the cycle (n+6) (refer to (i) of Figure 3), the content is written to the data memory 11 as data A(6) (refer to (d) of Figure 3).

During the three cycles in which the ALU 15 executes FUNC, the operation overlaps with the write operation of the operation result immediately before to the data memory 11 in the cycle 1, and the operation overlaps with the read operation of the operand to be operated next in cycles 2 and 3. Further, overlapping with the write operation to or read operation from the data memory 11, the calculation of the address of operand to be required in the next cycle is being performed at the operand address calculation section 20.

As the operation of I POSG is performed in this manner, and the end mark "■" is set to the I register 32, the control section 50 detects it at the end judging circuit 42, sets NEGGmax, i.e., "9", to the I register 32, and performs operation about Iε NEGG of the step 3 subsequently in the similar fashion.

In the above-mentioned embodiment, index values were divided into two groups, but generally index values may be divided into a plurality of groups, and different operation may be performed on individual groups. Moreover, though in the above embodiment the indices were grouped based on the value G(I) in the data memory, the operation result of the ALU 15 may be used alternatively.

Accordingly, it may be so designed as to sequentially judge the operation result of the ALU 15 the positive/negative discriminator 37 concurrent with the operation of the aforementioned steps 2 and 3, and to classify and generate index subset for the next different operation at the index calculation section 30 based on the judgement result. Consequently, continuous operation of multiple different mathematical expressions can be performed, and in addition the total operation speed increases sharply due to the availability of the saving of time required for the generation of each index set during the above operation. In the embodiment shown in Figure 2, the B register 12, B1 register 13, C register 14, and DA register 17 of the vector operation section 10, and the I register 32, I1 register 33, I2 register 34, and IA register 41 of the index calculation section 30 are for repeating temporary storage operation of input value synchronized respectively with a drive clock (not shown) to be output from the control section 50. Particularly, as already described, when the operation of a certain formula and the index generation for the operation of the next different formula are performed concurrently, the selectors SA and SB of the operand address calculation section 20 perform selection operation in the manner shown in Figure 3 (j) through (m) in the cycles (n+3)—(n+5).

Operation data stored in the data memory 11 are outputted properly to an output device (not shown), and printed or displayed in the specified format.

**Claims**

1. A vector processor including:

a data memory (11) for storing elements of a vector or a matrix;

an index memory (31) for storing one or more sets of indexes for the elements stored in said data memory (11);

an operand address calculation circuit (20) for calculating a read-out address for reading out data from said data memory (11) such that, when an index which is included in a particular index set is read out from said index memory (31), data designated by the index thus read out is read out; and

an arithmetic circuit (15) for performing a required calculation for data read out from said data memory (11) according to the read-out address obtained by the calculation in said operand address calculation circuit (20), whereby continuous vector calculation for data stored in said data memory (11) is performed in response to continuous reading out of indexes from said index memory (31), characterized by:

a first register (38) for storing address data representing a start address of an index in an index set (U) among the index sets stored in said index memory (31);

a second register (39) for storing address data corresponding to an address in a vacant region, said vacant region being defined as a memory region of said index memory (31) in which said index set (U) is not stored;

address progressing means (SA, 40 or 43, 41) for successively reading out indexes belonging to said index set (U) while the address represented by the address data stored in said first register (38) is being progressed in a predetermined manner, and for separately progressing the address represented by the address data stored in said second register (39) each time an index belonging to said index set (U) is read out;

a third register (32—36) for temporarily storing indexes successively read out from said index memory (31);

a judging circuit (37) for judging as to whether or not data read out from said data memory (11) corresponding to an index temporarily stored in said third register (32—36) or calculated value outputted from said arithmetic circuit has a prespecified attribute; and

a selector (SE) for selectively writing an index into said vacant region of said index memory (31) according to the address content changed by said address progressing means (SA, 40 or 43, 41) of the address data stored in said second register (39),

wherein index sets whose elements are indexes of data or calculated values judged to have the same attribute by said judging circuit (37) are classified, and stored in said index memory (31), whereby continuous operand access may be executed only for indexes which belong to said classified and stored index sets.

2. A vector processor as claimed in claim 1 characterized in that said address progressing means (SA, 40, 41) produces read-out address data for reading out data from said index memory (31) by successively adding address data stored in said first register (38) and an index temporarily stored in said third register (32—36).

3. A vector processor as claimed in claim 1 or claim 2 characterized in that said address progressing means (SA, 40, 41) produces write address data for writing data into said index memory (31) by successively adding address data stored in said second register (39) and an index temporarily stored in said third register (32—36).

4. A vector processor as claimed in claim 1 characterized in that said address progressing means (SA, 43, 41) produces read-out address data for reading out data from said index memory (31) by performing incremental operation on address data stored in said first register (38).

5. A vector processor as claimed in claim 1 or claim 4 characterized in that said address progressing means (SA, 43, 41) produces write address data for writing data into said index memory (31) by performing incremental operation on address data stored in said second register (39).

6. A vector processor as claimed in claim 1 wherein the classified index sets are each stored as a chain of indexes and, for indexes within each chain, the address of an index stored in the vacant area is related to the value of another index stored in the vacant area whereby said address may be calculated from said value so as to link the indexes together.

**Patentansprüche**

1. Ein Vektor-Prozessor einschließlich:

eines Datenspeichers (11) für die Speicherung der Elemente eines Vektors oder einer Matrix;

eines Indexspeichers (31) für die Speicherung eines oder mehrerer Indexsätze für die im erwähnten Datenspeicher (11) gespeicherten Elemente;

einer Operandenadreßrechnungsschaltung (20) zur Berechnung einer Ausleseadresse zum Auslesen von Daten aus dem erwähnten Datenspeicher (11) in der Weise, daß, wenn ein in einem bestimmten Indexsatz enthaltener Index aus dem erwähnten Indexspeicher (31) ausgelesen wird, Daten ausgelesen werden, die von dem so ausgelesenen Index bezeichnet werden; und

einer arithmetischen Schaltung (15) zur Ausführung einer erforderlichen Berechnung für aus dem genannten Datenspeicher (11) ausgelesene, der Ausleseadresse entsprechende Daten, die durch die Rechnung in der erwähnten Operandenadreßrechnungsschaltung (20) erzielt wurden, wodurch die kontinuierliche Vektor-Berechnung für im erwähnten Datenspeicher (11) gespeicherte Daten als Reaktion auf das kontinuierliche Auslesen von Indizes aus dem erwähnten Indexspeicher (31) erfolgt, gekennzeichnet durch:

ein erstes Register (38) zur Speicherung von Adreßdaten, die eine Anfangsadresse eines Index in einem Indexsatz (U) unter den im erwähnten Indexspeicher (31) gespeicherten Indexsätzen darstellen;

ein zweites Register (39) zur Speicherung von Adreßdaten, die einer Adresse in einem unbesetzten Bezirk entsprechen, wobei der erwähnte unbesetzte Bezirk als ein Speicherbezirk des erwähnten Indexspeichers (31) definiert wird, worin der erwähnte Indexsatz (U) nicht gespeichert ist;

Adreßfortschalteinrichtungen (SA, 40 oder 43, 41) für das fortlaufende Auslesen von Indizes, die zum erwähnten Indexsatz (U) gehören, während die Adresse, die durch die im erwähnten ersten Register (38) gespeicherten Adreßdaten dargestellt wird, auf festgelegte Weise fortgeschaltet wird, sowie zur separaten Fortschaltung der Adresse, die durch die im erwähnten zweiten Register (39) gespeicherten Adreßdaten dargestellt wird, sobald ein Index ausgelesen wird, der zum erwähnten Indexsatz (U) gehört;

ein drittes Register (32—36) für die vorübergehende Speicherung von fortlaufend aus dem erwähnten Indexspeicher (31) ausgelesenen Indizes;

eine Beurteilungsschaltung (37) zur Beurteilung der Frage, ob Daten, die aus dem erwähnten Datenspeicher (11) ausgelesen wurden und einem vorübergehend im erwähnten dritten Register (32—36) gespeicherten Index oder einem aus der erwähnten arithmetischen Schaltung ausgegebenen berechneten Wert entsprechen, über ein vorspezifiziertes Attribut verfügen; und

ein Selektor (SE) zum selektiven Einschreiben eines Index in den erwähnten unbesetzten Bezirk des erwähnten Indexspeichers (31) entsprechend dem Adresseninhalt, der durch die erwähnte Adreßfortschreibungseinrichtung (SA, 40 oder 43, 41) der im erwähnten zweiten Register (39) gespeicherten Adreßdaten geändert wurde, wobei Indexsätze, deren Elemente Indizes von Daten oder berechneten Werten darstellen, die von der erwähnten Beurteilungsschaltung (37) als über dasselbe Attribut verfügend beurteilt wurden, im erwähnten Indexspeicher (31) klassifiziert und gespeichert werden, wodurch ein kontinuierlicher Operandenzugriff nur für Indizes ausgeführt werden kann, die zu den erwähnten klassifizierten und gespeicherten Indexsätzen gehören.

2. Ein Vektor-Prozessor gemäß Anspruch 1, dadurch gekennzeichnet, daß die erwähnte Adreßfortschreibungseinrichtung (SA, 40, 41) Ausleseadreßdaten für das Auslesen von Daten aus dem erwähnten Indexspeicher (31) erzeugt, in dem fortlaufend Adreßdaten, die im erwähnten Register (38) gespeichert sind, und ein vorübergehend im erwähnten dritten Register (32—36) gespeicherter Index addiert werden.

3. Ein Vektor-Prozessor gemäß Anspruch 1 oder 2, dadurch gekennzeichnet, daß die erwähnte Adreßfortschreibeinrichtung (SA, 40, 41) Schreibadreßdaten zum Einschreiben von Daten in der erwähnten Indexspeicher (31) durch fortlaufende Addition von im erwähnten zweiten Register (39) gespeicherten Adreßdaten und einem zweiten Index, der vorübergehend im erwähnten dritten Register (32—36) gespeichert wird, erzeugt.

4. Ein Vektor-Prozessor gemäß Anspruch 1, dadurch gekennzeichnet, daß die erwähnte Adreßfortschreibeinrichtung (SA, 43, 41) Ausleseadreßdaten zum Auslesen von Daten aus dem erwähnten Indexspeicher (31) durch inkrementale Operation an Adreßdaten erzeugt, die im erwähnten ersten Register (38) gespeichert sind.

5. Ein Vektor-Prozessor gemäß Anspruch 1 oder Anspruch 4, dadurch gekennzeichnet, daß die erwähnte Adreßfortschreibeinrichtung (SA, 43, 41) Schreibadreßdaten zum Einschreiben von Daten in den erwähnten Indexspeicher (31) durch inkrementale Operation an Adreßdaten, die im erwähnten zweiten Register (39) gespeichert sind, erzeugt.

6. Ein Vektor-Prozessor gemäß Anspruch 1, wobei die klassifizierten Indexsätze jeweils als Indexkette gespeichert sind und für Indizes innerhalb jeder Kette die Adresse eines im unbesetzten Bezirk gespeicherten Index mit dem Wert eines weiteren Index in Beziehung gesetzt wird, der im unbesetzten Bezirk gespeichert ist, wodurch die erwähnte Adresse sich aus dem erwähnten Wert errechnen läßt und damit die Indizes verknüpft.

**Revendications**

1. Un système de traitement de vecteurs comprenant:

—une mémoire de données (11) pour mémoriser les éléments d'un vecteur ou d'une matrice;

—une mémoire d'index (31) pour mémoriser un ou plusieurs groupes d'index pour les éléments mémorisés dans ladite mémoire de données (11);

—un circuit de calcul d'adresse d'opérande (20) pour calculer une adresse de lecture en vue de la lecture d'une donnée dans ladite mémoire de données (11) de telle sorte que, quand un index qui est inclus dans un groupe particulier d'index est lu dans ladite mémoire d'index (31), la donnée désignée par l'index ainsi lu se trouve lue;

—un circuit arithmétique (15) pour effectuer le calcul requis pour la donnée lue dans ladite mémoire de données (11) en fonction de l'adresse lue obtenue par le calcul effectué par ledit circuit de calcul d'adresse d'opérande (20), ce par quoi le calcul continu de vecteur pour les données mémorisées dans ladite mémoire de données (11) est effectué en réponse à une lecture continue des index dans ladite mémoire d'index (31), caractérisé par:

—un premier registre (38) pour mémoriser une donnée d'adresse représentant l'adresse de départ d'un index dans un groupe d'index (U) parmi les groupes d'index mémorisés dans ladite mémoire d'index (31);

—un second registre (39) pour mémoriser une donnée d'adresse correspondant à une adresse dans une région vacante, ladite région vacante étant définie comme une région de mémorisation dans ladite mémoire d'index (31) dans laquelle ledit groupe d'index (U) n'est pas mémorisé;

—un moyen d'avancement des adresses (SA, 40 ou 43, 41) pour lire successivement les index appartenant audit groupe d'index (U) pendant que l'adresse représentée par la donnée d'adresse mémorisée dans ledit premier registre (38) est en train de faire l'objet d'un avancement d'une manière prédéterminée, et pour faire avancer séparément l'adresse représentée par la donnée d'adresse mémorisée dans ledit second registre (39) à chaque fois qu'un index appartenant audit groupe d'index (U) est lu;

—un troisième registre (32—36) pour mémoriser temporairement les index lus successivement dans ladite mémoire d'index (31);

—un circuit d'estimation (37) pour estimer si une donnée lue dans ladite mémoire de données (11) correspondant à un index temporairement mémorisé dans ledit troisième registre (32—36) ou la valeur calculée fournie par ledit circuit arithmètique a ou non une caractéristique préspécifiée; et

—un sélecteur (SE) pour écrire sélectivement un index dans ladite région vacante de ladite mémoire d'index (31) en correspondance au contenu d'adresse, modifié par ledit moyen d'avancement d'adresse (SA, 40 ou 43, 41) de la donnée d'adresse mémorisée dans ledit second registre (39),

—dans lequel les groupes d'index dont les éléments sont des index de données ou des valeurs calculées estimés comme ayant la même caractéristique par ledit circuit d'estimation (37) sont classifiés et mémorisés dans ladite mémoire d'index (31), de façon qu'un accès continu à l'opérande puisse être effectué seulement pour des index qui appartiennent auxdits groupes d'index classifies et mémorisés.

2. Un système de traitement de vecteurs tel que revendiqué dans la revendication 1, caractérisé en ce que ledit moyen de progression d'adresse (SA, 40, 41) produit une donnée d'adresse de lecture pour une lecture de donnée dans ladite mémoire d'index (31) en additionnant successivement la donnée d'adresse mémorisée dans ledit premier registre (38) et l'index temporairement mémorisé dans ledit troisième registre (32—36).

3. Un système de traitement de vecteurs tel que revendiqué dans la revendication 1 ou la revendication 2, caractérisé en ce que ledit moyen d'avancement d'adresse (SA, 40, 41) produit une donnée d'enregistrement d'adresse pour l'enregistrement d'une donnée dans ladite mémoire d'index (31) par addition successive de données d'adresse mémorisées dans ledit second registre (39) et d'un index temporairement mémorisé dans ledit troisième registre (32—36).

4. Un système de traitement de vecteurs tel que revendiqué dans la revendication 1, caractérisé en ce que ledit moyen d'avancement d'adresse (SA, 43, 41) produit une donnée d'adresse de lecture pour lire une donnée dans ladite mémoire d'index (31) par exécution d'une opération incrémentale sur les données d'adresse mémorisées dans ledit premier registre (38).

5. Un système de traitement de vecteurs tel que revendiquè à la revendication 1 ou la revendication 4, caractérisé en ce que ledit moyen d'avancement d'adresse (SA, 43, 41) produit une donnée d'adresse d'écriture pour écrire une donnée dans ladite mémoire d'index (31) par exécution d'une opération incrémentale sur les données d'adresse mémorisées dans ledit second registre (39).

6. Un système de traitement de vecteurs tel que revendiqué à la revendication 1 dans lequel les groupes d'index classifiés sont chacun mémorisés comme une chaîne d'index et, pour les index situés dans chaque chaîne, l'adresse d'un index mémorisé dans la région vacante est mis en relation avec la valeur d'un autre index mémorisé dans la région vacante de telle sorte que ladite adresse puisse être calculée à partir de ladite valeur afin de lier les index ensemble.

FIG.1

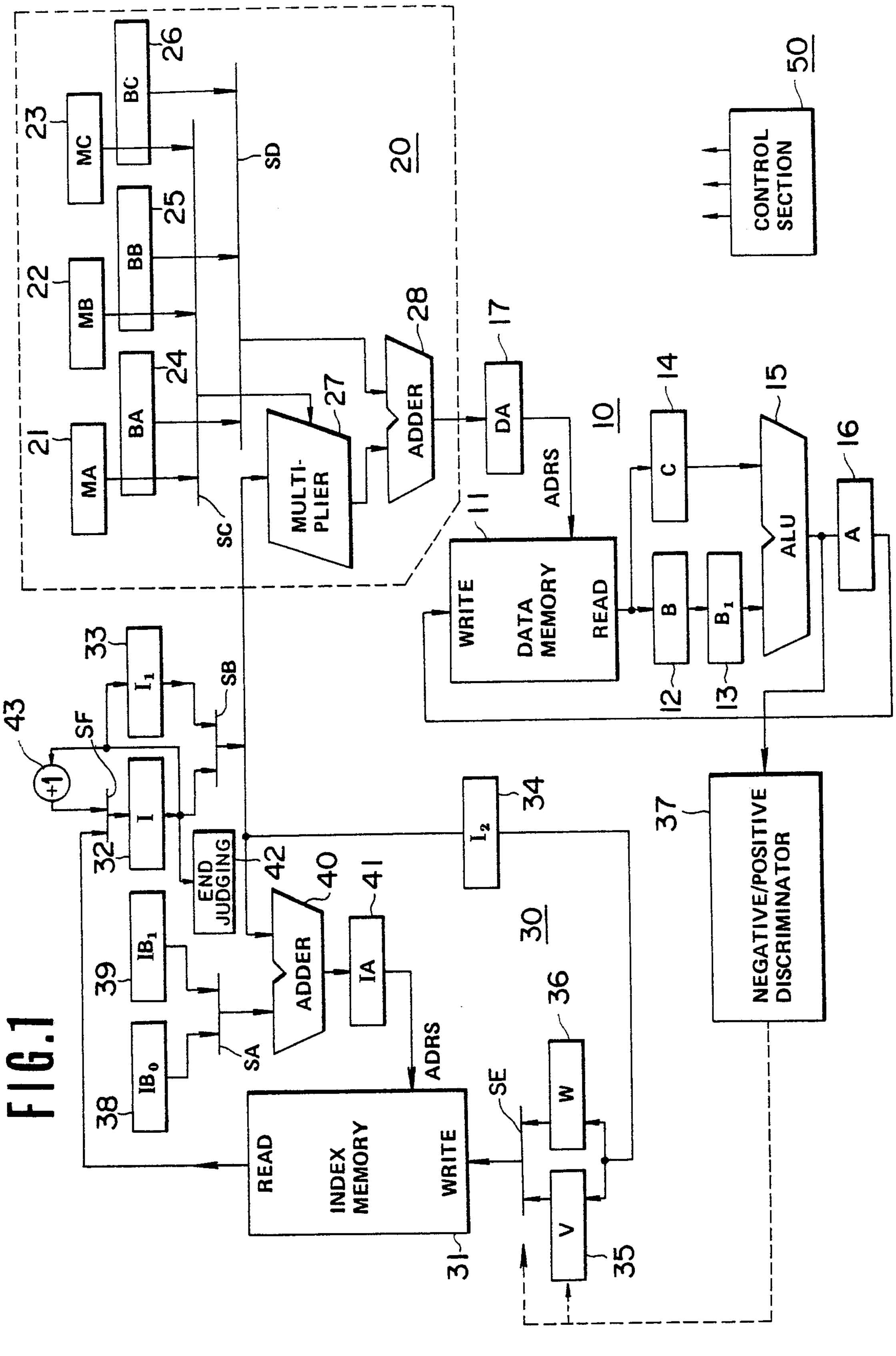
MA
MB
MC
BA
BB
BC
21
22
23
24
25
26
27
28
SC
SD
20
MULTI-
PLIER
ADDER
DA
17
ADRS
10
11
WRITE
DATA
MEMORY
READ
B
$B_1$
12
13
C
14
ALU
15
A
16
CONTROL
SECTION
50
43
+1
SF
I
32
$I_1$
33
SB
END
JUDGING
42
$I_2$
34
$IB_1$
39
$IB_0$
38
SA
ADDER
40
IA
41
30
ADRS
READ
INDEX
MEMORY
WRITE
31
SE
W
36
V
35
37
NEGATIVE/POSITIVE
DISCRIMINATOR

FIG.2

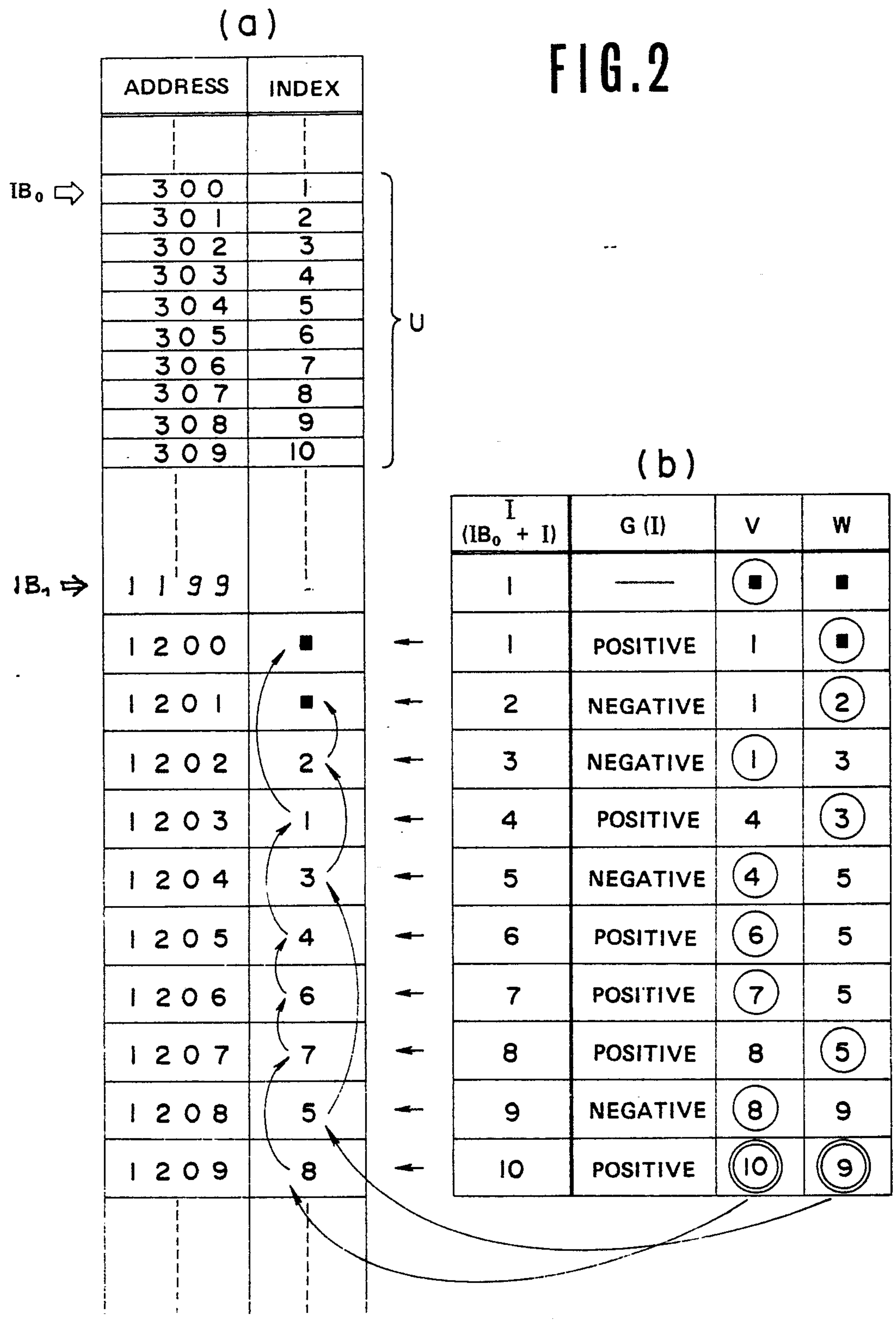
(a)
ADDRESS
INDEX
IB0
300 1
301 2
302 3
303 4
304 5
305 6
306 7
307 8
308 9
309 10
U
IB1
1199
1200 ■
1201 ■
1202 2
1203 1
1204 3
1205 4
1206 6
1207 7
1208 5
1209 8
(b)
I (IB0 + I)
G (I)
V
W
1 —— ■ ■
1 POSITIVE 1 ■
2 NEGATIVE 1 2
3 NEGATIVE 1 3
4 POSITIVE 4 3
5 NEGATIVE 4 5
6 POSITIVE 6 5
7 POSITIVE 7 5
8 POSITIVE 8 5
9 NEGATIVE 8 9
10 POSITIVE 10 9

FIG.3

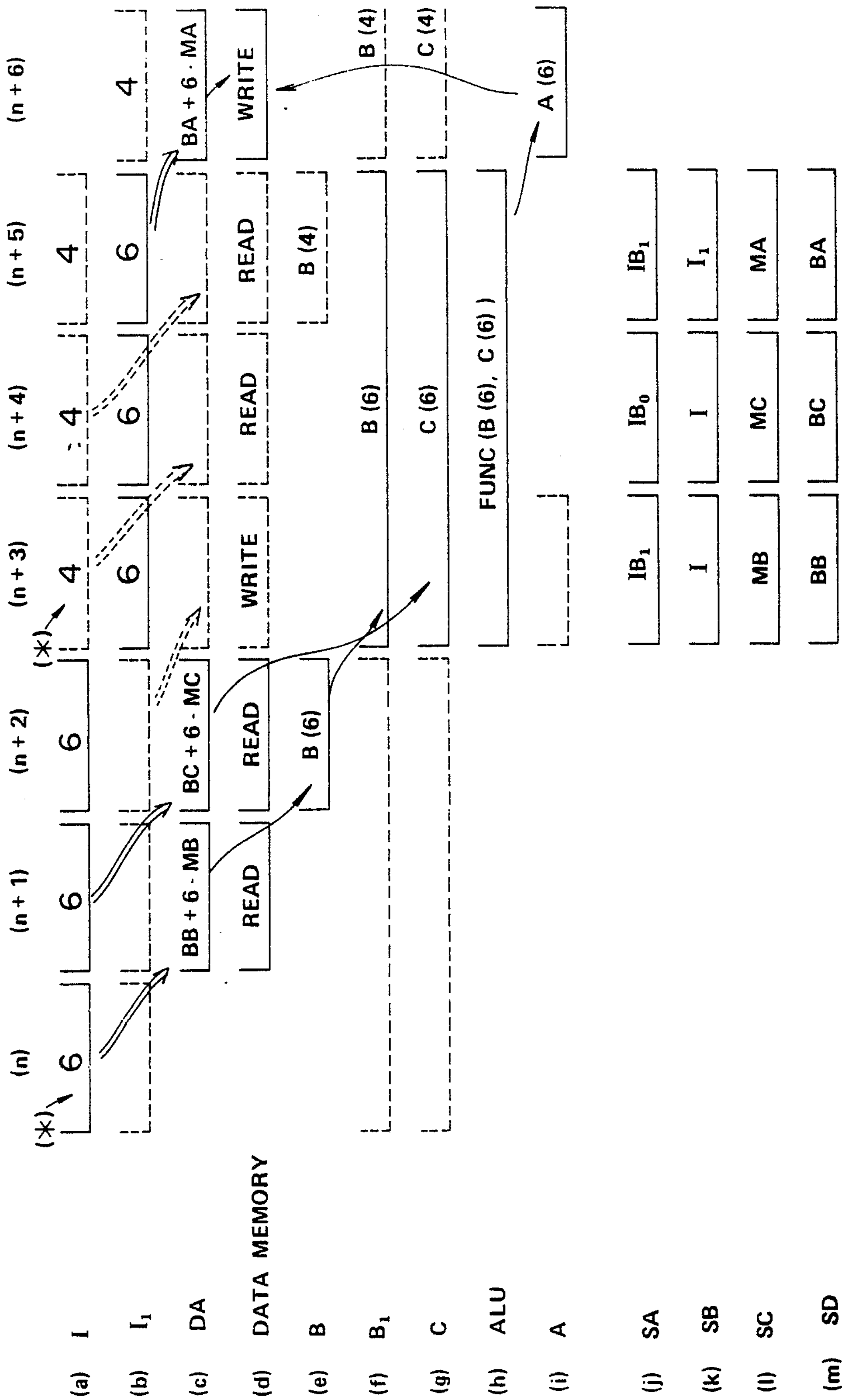
(a) I
(b) I1
(c) DA
(d) DATA MEMORY
(e) B
(f) B1
(g) C
(h) ALU
(i) A
(j) SA
(k) SB
(l) SC
(m) SD
(n)
(n+1)
(n+2)
(n+3)
(n+4)
(n+5)
(n+6)
(✱)
6
4
BB+6·MB
BC+6·MC
BA+6·MA
READ
WRITE
B (6)
B (4)
C (6)
C (4)
FUNC (B (6), C (6) )
A (6)
IB1
IB0
I
I1
MB
MC
MA
BB
BC
BA